# EUROPÄISCHE PATENTSCHRIFT

(11) **EP 2 078 554 B1**
(45) Veröffentlichungstag und Bekanntmachung des Hinweises auf die Patenterteilung: **22.06.2011**
(21) Anmeldenummer: 09150502.4
(22) Anmeldetag: 14.01.2009
(51) Int. Cl.: B01D 46/12, B01D 46/00

(54) **Filtereinrichtung zur Filtration gasförmiger Fluide**
Filter device for filtering gaseous fluids
Dispositif de filtre destiné à la filtration de fluides gazeux

(30) Priorität: 14.01.2008 DE 202008000565 U
(43) Veröffentlichungstag der Anmeldung: 15.07.2009
(73) Patentinhaber: MANN+HUMMEL GmbH, 71638 Ludwigsburg (DE)
(72) Erfinder: Ammersdörfer, Micha, 84160, Frontenhausen (DE); Bartel, Christel, 84130, Dingolfing (DE)

(56) Entgegenhaltungen:
- EP-A- 1 504 803
- DE-A1- 10 320 260
- DE-C1- 4 338 100
- FR-A- 2 901 184

## Beschreibung

### Technisches Gebiet

Die Erfindung bezieht sich auf eine Filtereinrichtung zur Filtration gasförmiger Fluide nach dem Oberbegriff des Anspruches 1.

### Stand der Technik

In der DE 101 38 880 B4 wird ein Kraftfahrzeug-Innenraumluftfilter beschrieben, der ein plissiertes, zickzackförmig gefaltetes Filterelement aufweist, das von der zu filtrierenden, in den Innenraum strömenden Luft passiert werden muss. Das Filterelement ist von streifenförmigen Rahmenteilen an zwei gegenüberliegenden Seitenteilen eingefasst, die jeweils an den Stirnseiten der Filterfalten anliegen und mit diesen verklebt sind.

Für eine wirkungsvolle Filtration der Innenraumluft muss das Filterelement an einen vorgegebenen Mindestdurchsatz der zu filtrierenden Luft angepasst sein, was eine entsprechend große Dimensionierung des Filterelementes erfordert. Andererseits ist man aus Platzgründen bestrebt, die Filtereinrichtung gut verstaubar auszubilden.
In der DE 43 38 100 C1 wird eine Filtereinrichtung für Luftführungsgehäuse in Belüftungs-, Heiz- oder Klimaanlagen von Fahrzeugen beschrieben, die einen in einem Filterkasten aufgenommenen Filter aus zwei nebeneinanderliegenden Filterelementen und eine eingeschränkte Zugangsöffnung zum Austausch der Filterelemente in Richtung quer zur Filterachse aufweist.

### Offenbarung der Erfindung

Der Erfindung liegt die Aufgabe zugrunde, eine Filtereinrichtung zur Filtration gasförmiger Fluide zu schaffen, die sich durch eine hohe Filtrationsleistung bei guter Verstaubarkeit auszeichnet.

Diese Aufgabe wird erfindungsgemäß mit den Merkmalen des Anspruches 1 gelöst. Die Unteransprüche geben zweckmäßige Weiterbildungen an.

Die erfindungsgemäße Filtereinrichtung zur Filtration gasförmiger Fluide weist zumindest zwei separat voneinander ausgebildete Filterelemente auf, die jeweils von seitlichen, streifenförmigen Rahmenteilen eingefasst sind. Die beiden Filterelemente liegen in der Montageposition Seite an Seite zueinander, so dass sich benachbarte streifenförmige Rahmenteile berühren. Die sich gegenüberliegenden Rahmenteile eines Filterelements besitzen einen unterschiedlich hohen Reibungskoeffizienten, wobei diejenigen Rahmenteile, die in Montageposition auf Kontakt zueinander liegen, einen kleineren Reibungskoeffizienten aufweisen.

Diese Ausführung hat den Vorteil, dass die reibungsärmeren Rahmenteile problemlos aneinander entlang gleiten können, wodurch die Montage der Filtereinrichtung erheblich vereinfacht wird. Es ist insbesondere möglich, die mindestens zwei Filterelemente in einen gemeinsamen Aufnahmeraum einzusetzen, der zwar zur Aufnahme der nebeneinander angeordneten Filterelemente vorgesehen ist, jedoch nur eine schmale Einschuböffnung für ein einzelnes Filterelement aufweist. In diesem Fall erfolgt die Montage in der Weise, dass zunächst das erste Filterelement über die Einschuböffnung in den Aufnahmeraum eingesetzt wird, anschließend seitlich verschoben wird und danach das zweite Filterelement über die Einschuböffnung in den Aufnahmeraum eingesetzt wird. Dabei gelangen die einander zugewandten Rahmenteile der beiden Filterelemente in Kontakt zueinander und es wird das Rahmenteil am zweiten Filterelement gleitend entlang des Rahmenteils am ersten, bereits eingesetzten Filterelement vorbei bewegt. Auf Grund der reibungsarmen Ausführung ist es möglich, diese gleitende Relativbewegung zwischen den Filterelementen ohne Beeinträchtigung durchzuführen, insbesondere ohne Gefahr einer unerwünschten Verformung eines Filterelementes bzw. eines Rahmensteiles. Nach Beendigung der Montage liegen die beiden Filterelemente nebeneinander und bilden eine gemeinsame Anströmseite und eine gemeinsame Abströmseite.

Es ist zweckmäßig, die beiden Filterelemente grundsätzlich gleich aufzubauen, insbesondere in spiegelverkehrter Symmetrie, so dass in der montierten Position die inneren, zueinander auf Kontakt liegenden Rahmenteile diejenigen mit geringerem Reibungskoeffizienten sind und die außen liegenden Rahmenteile diejenigen mit höherem Reibungskoeffizienten.

Der höhere Reibungskoeffizient der äußeren Rahmenteile weist den weiteren Vorteil auf, dass hierdurch eine bessere Haftung zu den umgebenden Wandungen des Aufnahmeschachtes bzw. -raumes möglich ist, so dass die äußeren Rahmenteile die Funktion eines Dichtungselementes übernehmen können und die Rohseite von der Reinseite der Filterelemente wirksam separieren. Der höhere Reibungskoeffizient lässt in der Montageposition die äußeren Rahmenteile an der Innenwand des Aufnahmeschachtes anhaften, wodurch ein luftdichter Abschluss an dieser Stelle erreicht wird.

Zusätzlich zu dem unterschiedlichen Reibungskoeffizienten weisen die äußeren und inneren Rahmenteile zweckmäßigerweise auch weitere unterschiedliche Materialeigenschaften auf. So kann es zweckmäßig sein, die inneren Rahmenteile, welche bei der Montage aneinander entlang gleiten, aus einem starren Material zu fertigen, wohingegen die äußeren Rahmenteile aus einem weicheren Material bestehen. Infrage kommt als Material in beiden Fällen Polyester (PES), jedoch mit unterschiedlicher Zusammensetzung bzw. einer unterschiedlichen Bruchkraft. Beispielsweise können die inneren Rahmenteile eine Bruchkraft von mindestens 800 N aufweisen, wohingegen die äußeren Rahmenteile vorteilhafterweise eine Bruchkraft von maximal 600 N besitzen. Das weichere Material der äußeren Rahmenteile verbessert die Eigenschaften als Dichtungselement zwischen Filterelement und Innenwand des Aufnahmeraums und bewirkt außerdem eine Dämpfung in Querrichtung, wodurch die Lageempfindlichkeit gegenüber Stößen verringert wird. Das härtere Material der inneren Rahmenteile verbessert dagegen die Gleitfähigkeit.

Zweckmäßigerweise besitzen die äußeren Rahmenteile eine größere Dicke als die inneren Rahmenteile, so dass in Querrichtung - quer zur Ebene der Rahmenteile - ein verhältnismäßig großer Puffer zwischen dem Filterelement und der Innenwand des Aufnahmeraumes besteht, welcher eine größere Einbautoleranz bedeutet und im Übrigen auch die Dämpfung gegen Stöße verbessert.

Es kann zweckmäßig sein, dass die inneren Rahmenteile, welche mit dem kleineren Reibungskoeffizienten versehen sind, zumindest an einer Stirnseite, zweckmäßigerweise aber an beiden Stirnseiten des Filterelementes überstehen. Der überstehende Abschnitt der inneren Rahmenteile hat die Funktion einer Montage- bzw. Entnahmehilfe, an diesem Abschnitt kann das betreffende Filterelement eingesetzt bzw. aus dem Aufnahmegehäuse entnommen werden. Um in Achsrichtung der Rahmenteile in der montierten Position keinen unnötigen Bauraum zu beanspruchen, ist es vorteilhaft, dass der überstehende Abschnitt des Rahmenteils winklig abgebogen ist bzw. in eine winklig abgebogene Position verbracht werden kann. Sofern das innere Rahmenteil in sich verhältnismäßig steif bzw. starr ausgebildet ist, kann im Übergang des überstehenden Abschnittes des Rahmenteils zum unmittelbar an der Seitenfläche des Filterelementes anliegenden Abschnitt ein Gelenk gebildet sein, beispielsweise durch eine Verjüngung der Wandstärke, das ein winkliges Abbiegen des überstehenden Abschnittes erlaubt. Bei einem in sich flexiblen, biegfähigen Material des inneren Rahmenteils ist eine Winkelbildung und ein Anlegen des überstehenden Abschnittes an die zugewandte Stirnseite des Filterelementes ohne Weiteres möglich.

Als Filterelement kommt insbesondere ein plissierter Filterpack infrage, also ein zickzackförmiges Filterelement, wobei die Filterfalten von dem zu reinigenden Fluid durchströmt werden, so dass die Anströmseite an der einen Seite des Filtermaterials der Filterfalten und die Abströmseite an der gegenüberliegenden Seite des Filtermaterials liegt. Die Anströmseite und die Abströmseite liegen jeweils in Ebenen, die parallel zu einer Mittelebene durch die Falten des Filterpacks verlaufen.

In der Montageposition besitzen die beiden Filterelemente insbesondere in ihrer Ausführung als plissierter Filterpack eine gemeinsame Anströmseite und eine gemeinsame Abströmseite. Auf Grund der parallelen Anordnung der beiden Filterelemente und ihrer vorteilhafterweise spiegelverkehrt symmetrischen Anordnung mit gleicher Dimensionierung vergrößert sich die zu durchströmende Filterfläche und sind einheitliche Anström- und Abströmebenen gegeben, was sich auf die Strömungsverhältnisse in den Filterelementen positiv auswirkt.

Entlang der inneren Rahmenteile ist in der montierten Position zweckmäßigerweise eine strömungs- bzw. luftdichte Verbindung gegeben, um Fehlluftströme über die Kontaktstelle zwischen den inneren Rahmenteilen des ersten und des zweiten Filterelementes zu verhindern.

Der verhältnismäßig geringe Reibungskoeffizient der inneren Rahmenteile, der beispielsweise zwischen 0.2 und 0.3 liegt, wird entweder durch die entsprechende Wahl eines Materials für das Rahmenteil realisiert und/ oder durch die Struktur des Rahmenteils, beispielsweise durch eine besonders dichte Webart. Des Weiteren ist es auch möglich, die inneren Rahmenteile mit einer entsprechend reibungsarmen Beschichtung zu versehen. Die äußeren Rahmenteile weisen einen etwa doppelt so hohen Reibungskoeffizienten auf.

Bei der Filtereinrichtung handelt es sich insbesondere um eine Filtereinrichtung, die in Kraftfahrzeugen zur Filtration der dem Innenraum zuzuführenden Luft eingesetzt wird. Grundsätzlich ist aber auch eine Anwendung beispielsweise zur Filtration der der Brennkraftmaschine zuzuführenden Verbrennungsluft möglich.

### Kurze Beschreibung der Zeichnungen

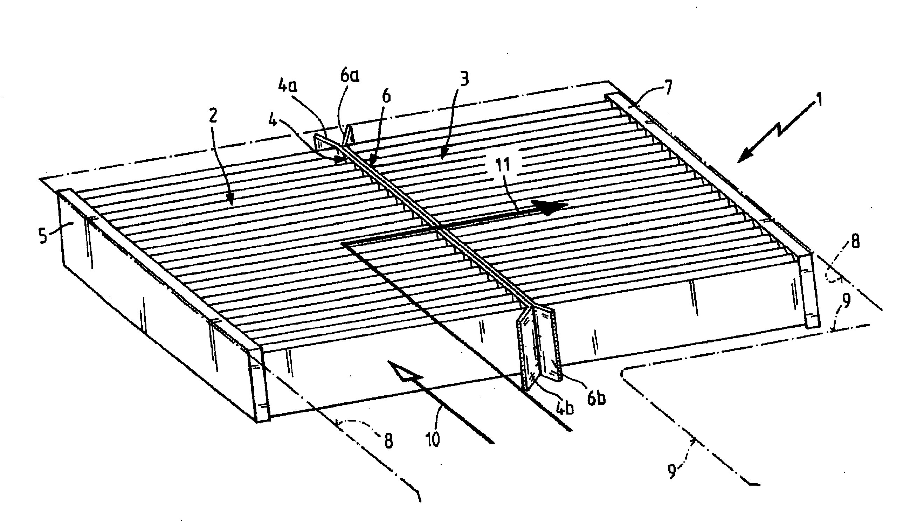

Weitere Vorteile und zweckmäßige Ausführungen sind den weiteren Ansprüchen, der Figurenbeschreibung und der Zeichnung zu entnehmen, in der eine Filtereinrichtung perspektivisch dargestellt ist, die zwei nebeneinander angeordnete Filterelemente aufweist, welche jeweils von seitlichen, streifenförmigen Rahmenteilen eingefasst sind.

### Ausführungsformen der Erfindung

Bei der in der Figur dargestellten Filtereinrichtung 1 handelt es sich um einen Filter zur Filtration der dem Innenraum eines Kraftfahrzeugs zuzuführenden Atemluft. Die Filtereinrichtung 1 umfasst zwei nebeneinander angeordnete Filterelemente 2, 3, die spiegelsymmetrisch zueinander ausgeführt sind und die gleichen Dimensionen aufweisen. Jedes Filterelement 2, 3 ist flexibel ausgebildet und als plissierter Filterpack mit zickzackförmigen Filterfalten ausgeführt. Die Filterelemente 2, 3 werden in der Darstellung der Figur von oben nach unten bzw. in Gegenrichtung durchströmt. Dementsprechend ist die Anströmseite bzw. die Abströmseite parallel zur Oberseite bzw. parallel zur Unterseite jedes Filterelementes gerichtet.

Jedes Filterelement 2, 3 ist von Rahmenteilen 4, 5 bzw. 6, 7 seitlich eingefasst. Die Rahmenteile 4 bis 7 befinden sich jeweils an den Stirnseiten der Filterfalten und sind mit den Stirnseiten verklebt. Die Rahmenteile 4 bis 7 bestehen beispielsweise aus Polyester (PES), sie können in sich biegsam ausgebildet sein.

In der in der Figur gezeigten Darstellung befindet sich die Filtereinrichtung 1 mit den Filterelementen 2 und 3 in der montierten Position, in der die Filterelemente 2, 3 unmittelbar nebeneinander und auf Kontakt liegen. Die beiden Filterelemente 2, 3 sind in einen Aufnahmeraum 8 eingesetzt, der sich beispielsweise in einem karosserieseitigen Bauteil des Kraftfahrzeugs befindet. Der Aufnahmeraum 8 weist eine Einschuböffnung 9 auf, deren Breite so bemessen ist, dass nur ein einzelnes Filterelementes 2 bzw. 3 eingeschoben bzw. entnommen werden kann. Dies bedeutet, dass zur Montage der Filtereinrichtung 1 zunächst das Filterelement 3 und erst anschließend das Filterelement 2 über die Einschuböffnung 9 eingesetzt wird. Dies erfolgt in der Weise, dass das Filterelement 3 wie mit Pfeilrichtung 11 angegeben in einem ersten Schritt über die Einschuböffnung 9 in den Aufnahmeraum 8 eingeführt und in einem zweiten Schritt seitlich innerhalb des Aufnahmeraums 8 verschoben wird, um Platz zu schaffen für das zweite Filterelement 2. Dieses wird anschließend wie mit Pfeilrichtung 10 angegeben über die Einschuböffnung 9 in den Aufnahmeraum 8 geradlinig eingeschoben. Einschuböffnung 9 und Aufnahmeraum 8 sind schematisch strichpunktiert dargestellt.

Um das Einschieben des Filterelementes 2 in den Aufnahmeraum 8 trotz des bereits eingeführten Filterelementes 3 zu erleichtern, bestehen die einander zugewandten Rahmenteile 4 und 6 an den Filterelementen 2 und 3, die im montierten Zustand die inneren Rahmenteile bilden, aus einem Material mit einem verhältnismäßig kleinen Reibungskoeffizienten, der beispielsweise zwischen 0.2 und 0.3 beträgt. Die reibungsarmen Rahmenteile 4, 6 erleichtern ein Aneinandergleiten der Filterelemente während der Montage. Im fertig montierten Zustand (siehe Darstellung) liegen die Filterelemente 2, 3 über ihre inneren Rahmenteile 4 und 6 auf Kontakt zueinander, entlang der Kontaktstelle ist die Verbindung zwischen den Filterelementen druck- bzw. strömungsdicht.

Jedes Filterelement 2, 3 weist außerdem äußere Rahmenteile 5, 7 auf, die sich von den jeweiligen inneren Rahmenteilen 4 und 6 unterscheiden. Zwar können sämtliche Rahmenteile, also sowohl die inneren Rahmenteile als auch die äußeren Rahmenteile jedes Filterelementes, aus dem gleichen Material wie z.B. Polyester bestehen. Allerdings ist über eine unterschiedliche Beschaffenheit und/oder über eine zusätzliche Beschichtung des inneren Rahmenteils ein unterschiedlicher Reibungskoeffizient gegeben. Die äußeren Rahmenteile 5, 7 besitzen einen höheren Reibungskoeffizienten als die inneren Rahmenteile 4, 6, der Reibungskoeffizient zwischen zwei äußeren Rahmenteilen ist beispielsweise doppelt so hoch wie derjenige zwischen zwei inneren Rahmenteilen.

Ein weiterer Unterschied besteht darin, dass die äußeren Rahmenteile eine größere Dicke aufweisen und insbesondere auch weicher ausgebildet sind als die inneren Rahmenteile 4, 6, die demgegenüber starrer ausgeführt sind. So können die äußeren Rahmenteile 5, 7 beispielsweise ein Bruchkraft von maximal 600 N aufweisen, die inneren Rahmenteile dagegen eine Bruchkraft von mindestens 800 N. Die größere Wandstärke der äußeren Rahmenteile und die Tatsache, dass diese weicher ausgebildet sind und außerdem einen höheren Reibungskoeffizienten aufweisen, verbessern die Dichtung gegenüber der Innenwand des Aufnahmeraumes 8. Den äußeren Rahmenteilen 5, 7 kommt somit die Funktion eines Dichtungselementes zu.

Die inneren Rahmenteile 4, 6 weisen an beiden Stirnseiten der Filterelemente 2, 3 überstehende Abschnitte 4a, 4b bzw. 6a, 6b auf. Diese überstehenden Abschnitte dienen als Montage- und Entnahmehilfe für die erleichterte Montage bzw. Entnahme jedes Filterelementes 2, 3 in den bzw. aus dem Aufnahmeraum 8. Die überstehenden Abschnitte 4a, 4b bzw. 6a, 6b können bezogen auf die Ebene der unmittelbar seitlich an den Filterelementen 2, 3 anliegenden Bereiche der inneren Rahmenteile winklig abgebogen werden und damit insbesondere an der Vorderseite bzw. der hinteren Seite jedes Filterelementes zur Anlage gelangen.

## Patentansprüche

1. Filtereinrichtung zur Filtration gasförmiger Fluide, insbesondere in Kraftfahrzeugen, umfassend einen Aufnahmeschacht mit umgebenden Wandungen, ein Filterelement (2), das von streifenförmigen Rahmenteilen (4, 5) seitlich eingefasst ist, und ein zweites, separat ausgebildetes Filterelement (3) mit seitlichen, streifenförmigen Rahmenteilen (6, 7), wobei in Montageposition die beiden Filterelemente (2, 3) nebeneinander angeordnet sind, **dadurch gekennzeichnet, dass** die sich gegenüberliegenden Rahmenteile (4, 5 bzw. 6, 7) eines Filterelements (2, 3) einen unterschiedlich hohen Reibungskoeffizienten aufweisen, derart, dass die einander zugewandten und auf Kontakt liegenden Rahmenteile (4, 6) der Filterelemente (2, 3) beim gleitenden Entlangbewegen des Rahmenteils des zweiten Filterelement am Rahmenteil des ersten Filterelements einen kleineren Reibungskoeffizienten aufweisen als die außen liegenden, in Montageposition an der Innenwand des Aufnahmeschachts anhaftenden Rahmenteile.

2. Filtereinrichtung nach Anspruch 1, **dadurch gekennzeichnet, dass** die inneren Rahmenteile (4, 6) einen Reibungskoeffizienten (η) kleiner als 0.3 aufweisen.

3. Filtereinrichtung nach Anspruch 1 oder 2, **dadurch gekennzeichnet, dass** die äußeren Rahmenteile (5, 7) einen Reibungskoeffizienten (η) aufweisen, der etwa doppelt so hoch ist wie der Reibungskoeffizient (η) der inneren Rahmenteile (4, 6).

4. Filtereinrichtung nach einem der Ansprüche 1 bis 3, **dadurch gekennzeichnet, dass** die inneren Rahmenteile (4, 6) aus starrem Material bestehen, insbesondere aus starrem Polyester.

5. Filtereinrichtung nach Anspruch 4, **dadurch gekennzeichnet, dass** die inneren Rahmenteile (4, 6) eine Bruchkraft von mindestens 800 N aufweisen.

6. Filtereinrichtung nach einem der Ansprüche 1 bis 5, **dadurch gekennzeichnet, dass** die äußeren Rahmenteile (5, 7) aus weichem Material gefertigt sind, insbesondere aus weichem Polyester.

7. Filtereinrichtung nach Anspruch 6, **dadurch gekennzeichnet, dass** die äußeren Rahmenteile (5, 7) eine Bruchkraft von höchstens 600 N aufweisen.

8. Filtereinrichtung nach einem der Ansprüche 1 bis 7, **dadurch gekennzeichnet, dass** die äußeren Rahmenteile (5, 7) eine größere Dicke aufweisen als die inneren Rahmenteile (4, 6).

9. Filtereinrichtung nach einem der Ansprüche 1 bis 8, **dadurch gekennzeichnet, dass** die inneren Rahmenteile (4, 6) zumindest an einer Stirnseite des Filterelements (2, 3) überstehen.

10. Filtereinrichtung nach Anspruch 9, **dadurch gekennzeichnet, dass** die überstehenden Abschnitte (4a, 4b, 6a, 6b) der inneren Rahmenteile (4, 6) winklig abgebogen sind.

11. Filtereinrichtung nach einem der Ansprüche 1 bis 10, **dadurch gekennzeichnet, dass** die Filterelemente (2, 3) als plissierter Filterpack ausgebildet sind.

12. Filtereinrichtung nach einem der Ansprüche 1 bis 11, **dadurch gekennzeichnet, dass** die beiden Filterelemente (2, 3) in der Montageposition eine gemeinsame Anström- und Abströmseite aufweisen.

13. Filtereinrichtung nach einem der Ansprüche 1 bis 12, **dadurch gekennzeichnet, dass** die beiden Filterelemente (2, 3) zueinander spiegelsymmetrisch ausgebildet sind.

## Claims

1. Filtering device for filtering gaseous fluids, in particular in motor vehicles, comprising a receiving compartment with surrounding walls, a filter element (2) surrounded laterally by strip-shaped frame parts (4, 5), and a second separately designed filter element (3) with lateral strip-shaped frame parts (6, 7), both filter elements (2, 3) being disposed side by side in assembly position, **characterized in that** the opposing frame parts (4, 5 and 6, 7 resp.) of a filter element (2, 3) feature different friction coefficients such that the frame parts (4, 6) of the filter elements (2, 3) facing each other and being in contact feature a lower friction coefficient when the frame part of the second filter element slides along the frame part of the first filter element than the outside located frame parts adhering in assembly position to the interior wall of the receiving compartment.

2. Filtering device according to claim 1, **characterized in that** the inner frame parts (4, 6) feature a friction coefficient (η) lower than 0.3.

3. Filtering device according to claim 1 or 2, **characterized in that** the outer frame parts (5, 7) feature a friction coefficient (η) which is approximately twice as high as the friction coefficient (η) of the inner frame parts (4, 6).

4. Filtering device according to one of the claims 1 to 3, **characterized in that** the inner frame parts (4, 6) are made of rigid material, in particular of rigid polyester.

5. Filtering device according to claim 4, **characterized in that** the inner frame parts (4, 6) feature a breaking strength of at least 800 N.

6. Filtering device according to one of the claims 1 to 5, **characterized in that** the outer frame parts (5, 7) are made of soft material, in particular of soft polyester.

7. Filtering device according to claim 6, **characterized in that** the outer frame parts (5, 7) feature a breaking strength of maximal 600 N.

8. Filtering device according to one of the claims 1 to 7, **characterized in that** the outer frame parts (5, 7) feature a greater thickness than the inner frame parts (4, 6).

9. Filtering device according to one of the claims 1 to 8, **characterized in that** the inner frame parts (4, 6) protrude at least at one front side of the filter element (2, 3).

10. Filtering device according to claim 9, **characterized in that** the protruding sections (4a, 4b, 6a, 6b) of the inner frame parts (4, 6) are bent off angularly.

11. Filtering device according to one of the claims 1 to 10, **characterized in that** the filter elements (2, 3) are designed as pleated filter pack.

12. Filtering device according to one of the claims 1 to 11, **characterized in that** the filter elements (2, 3) feature a common on-flow and off-flow side when in assembly position.

13. Filtering device according to one of the claims 1 to 12, **characterized in that** both filter elements (2, 3) are designed mirror-symmetrically to each other.

## Revendications

1. Dispositif de filtration pour la filtration de fluides gazeux, en particulier dans des véhicules automobiles, comprenant un compartiment d'admission entouré de parois, un élément filtrant (2) entouré latéralement par deux parties de cadre (4,5) en forme de bande et un deuxième élément filtrant (3) séparé avec des parties de cadre (6, 7) latérales en forme de bande, les deux éléments filtrants (2, 3) étant disposés l'un à côté de l'autre en position de montage, **caractérisé en ce que** les parties de cadre opposées (4, 5 resp. 6, 7) d'un élément filtrant (2, 3) présentent un coefficient de frottement différent, de sorte que les parties de cadre (4, 6) orientées l'une en face de l'autre et étant en contact avec les éléments filtrants (2, 3) présentent un coefficient de frottement plus faible, lorsque la partie de cadre du deuxième élément filtrant glisse le long de la partie de cadre du premier élément filtrant, que les parties de cadre extérieures adhérant en position de montage à la paroi intérieure du compartiment d'admission.

2. Dispositif de filtration selon la revendication 1, **caractérisé en ce que** les parties de cadre (4, 6) intérieures présentent un coefficient de frottement (η) inférieur à 0,3.

3. Dispositif de filtration selon la revendication 1 ou 2, **caractérisé en ce que** les parties de cadre (5, 7) extérieures présentent un coefficient de frottement (η) étant environ deux fois plus élevé que le coefficient de frottement (η) des parties de cadre (4, 6) intérieures.

4. Dispositif de filtration selon l'une des revendications 1 à 3, **caractérisé en ce que** les parties de cadre (4, 6) intérieures sont réalisées en un matériau rigide, notamment en un polyester rigide.

5. Dispositif de filtration selon la revendication 4, **caractérisé en ce que** les parties de cadre (4, 6) intérieures présentent une résistance à la rupture d'au moins 800 N.

6. Dispositif de filtration selon l'une des revendications 1 à 5, **caractérisé en ce que** les parties de cadre (5, 7) extérieures sont réalisées en un matériau souple, notamment en un polyester souple.

7. Dispositif de filtration selon la revendication 6, **caractérisé en ce que** les parties de cadre (5, 7) extérieures présentent une résistance à la rupture maximale de 600 N.

8. Dispositif de filtration selon l'une des revendications 1 à 7, **caractérisé en ce que** les parties de cadre (5, 7) extérieures présentent une épaisseur supérieure à celle des parties de cadre (4, 6) intérieures.

9. Dispositif de filtration selon l'une des revendications 1 à 8, **caractérisé en ce que** les parties de cadre (4, 6) intérieures dépassent au moins d'une face frontale de l'élément filtrant (2, 3).

10. Dispositif de filtration selon la revendication 9, **caractérisé en ce que** les sections en saillie (4a, 4b, 6a, 6b) des parties de cadre (4, 6) intérieures sont coudées de façon angulaire.

11. Dispositif de filtration selon l'une des revendications 1 à 10, **caractérisé en ce que** les éléments filtrants (2, 3) sont formés en un carton filtrant plissé.

12. Dispositif de filtration selon l'une des revendications 1 à 11, **caractérisé en ce que** les deux éléments filtrants (2, 3) présentent un côté d'afflux et un côté d'écoulement commun en position de montage.

13. Dispositif de filtration selon l'une des revendications 1 à 12, **caractérisé en ce que** les deux éléments filtrants (2, 3) sont disposés en symétrie en miroir l'un par rapport à l'autre.
